# NEUE EUROPÄISCHE PATENTSCHRIFT

(11) **EP 0 322 625 B2**
(45) Veröffentlichungstag und Bekanntmachung des Hinweises auf die Entscheidung über den Einspruch: **03.01.1996**
(45) Hinweis auf die Patenterteilung: 28.11.1990
(21) Anmeldenummer: 88120764.1
(22) Anmeldetag: 13.12.1988
(51) Int. Cl.: H02G 3/06, F16L 5/02

(54) **Kabelverschraubung**
Screw-threaded cable fitting
Fixation de câbles vissée

(30) Priorität: 24.12.1987 DE 8716966 U
(43) Veröffentlichungstag der Anmeldung: 05.07.1989
(73) Patentinhaber: WISKA Hoppmann & Mulsow GmbH, D-24568 Kaltenkirchen (DE)
(72) Erfinder: Pearson, William, D-2070 Grosshansdorf (DE); Jenss, Raimund, D-2061 Elmenhorst (DE)
(74) Vertreter: Glaeser, Joachim, Dipl.-Ing.

(56) Entgegenhaltungen:
- DE-A- 3 109 583
- DE-A- 3 418 978
- DE-A- 3 512 578
- DE-A- 3 535 595
- DE-A- 3 604 213
- DE-B- 2 631 996

## Beschreibung

Die Erfindung bezieht sich auf eine Kabelverschraubung aus Kunststoff zur Ein- und Durchführung, Abdichtung und Zugentlastung von Kabeln od. dgl., bestehend aus einem Schraubstutzen mit Dichtungskörper und einer Hutmutter, wobei am Schraubstutzen voneinander getrennte Zungen angeordnet sind, welche beim Aufschrauben der Hutmutter zusammen mit dem Dichtungskörper auf die Umfangsfläche des Kabels gedrückt werden.

Eine derartige Kabelverschraubung ist bekannt (DE-A 35 35 595 und DE-A 3 604 213), sie weist jedoch relativ kompliziert ausgebildete Zungen auf, so daß die Herstellung der Form schwierig und der Ausformvorgang selbst nicht ganz unproblematisch ist. Außerdem bestehen hinsichtlich der Dichtungswirkung Bedenken, da die Klemmbereiche zwischen der Verschraubung und dem Kabel aus einer Vielzahl einzelner Flächen unterschiedlicher axialer und radialer Lage gebildet sind.

Die Erfindung befaßt sich mit dem Problem, eine Kabelverschraubung der eingangs genannten Art so auszugestalten, daß erhöhte Anforder-ungen an Dichtigkeit und Zugentlastung erfüllt werden und dennoch ein einfacher Aufbau der Kabelverschraubung möglich ist.

Erreicht wird dies durch die in den Patentansprüchen angegebenen Merkmale.

Im Prinzip beruht die vorliegende Erfindung einerseits auf der Verwendung von axial vorstehenden Zungen, wobei einander benachbarte Zungen eine unterschiedliche Radiallage haben. Durch das Aufschrauben der Hutmutter gelangen die äußeren Zungen mit ihren Innenflächen auf die Außenflächen der inneren Zungen und üben eine in Umfangsrichtung gleichförmige Kraft auf den Dichtungskörper aus. Bei einer abgewandelten Ausführungsform sind die vorstehenden Enden der Zungen über zwischengesetzte Kugeln formschlüssig miteinander verbunden.

Die an den freien Enden der Zungen vorstehenden Schneiden verschieben sich kreisbogenförmig ineinander und sorgen für einen hervorragenden Formschluß zwischen diesen Schneiden der Verschraubung und der zylindrischen Oberfläche des Kabelmantels. Die Radien der Schneiden können mit einem zwischen dem größten und kleinsten Klemmbereich liegenden Radius bemessen sein, um eine mittlere Durchmesseranpassung zu erreichen.

Die Erfindung wird nachstehend an Hand der Zeichnung beispielsweise erläutert.

Fig. 1 zeigt eine Längsquerschnittsansicht durch einen Schraubstutzen für eine Verschraubung gemäß der Erfindung.

Fig. 2 zeigt in vergrößertem Maßstab Einzelheiten des linksseitigen Endes des in Fig. 1 gezeigten Schraubstutzens einer Verschraubung gemäß der Erfindung.

Fig. 3 zeigt eine Querschnittsansicht einer Hutmutter für die Verschraubung gemäß der Erfindung.

Fig. 4 zeigt eine in vergrößertem Maßstab gehaltene Seitenansicht von links her auf den in Fig. 2 gezeigten Stutzen.

Fig. 5 zeigt eine Längsquerschnittsansicht durch einen abgewandelten Schraubstutzen für eine Verschraubung gemäß der Erfindung.

In der Zeichnung ist der Schraubstutzen mit 10 bezeichnet. Der Schraubstutzen 10 besteht aus einem inneren Durchgang zur Aufnahme des Kabels. Er ist am Außenrand mit zwei Gewinden versehen, deren eines zum Einschrauben in ein Gehäuse eines Kabelverteilerkastens beispielsweise und deren anderes zum Aufschrauben einer Hutmutter 20 geeignet ist. Mit 30 ist ein Sechskantteil bezeichnet, der zur Montage der Kabelverschraubung herangezogen wird. Dieser Sechskant 30 kann mit sogenannten Stemmschlitzen versehen sein, um das Festziehen der Verschraubung im Gewinde eines Verteilerkastens zu erleichtern.

Im Inneren des Schraubstutzens 10 ist eine Hinterschneidung 15 vorgesehen, die zur Aufnahme eines im wesentlichen zylinderringförmigen Dichtungskörpers aus Gummi od. dgl. dient.

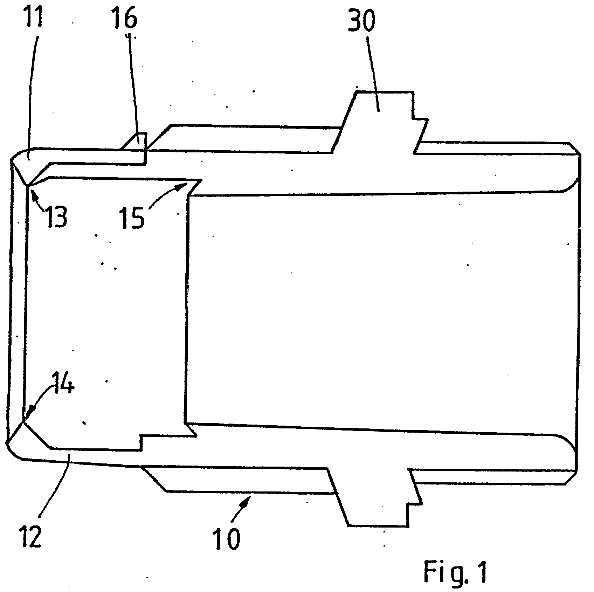

In Fig. 1 sind im Querschnitt zwei einander gegenüberliegende Zungen gezeigt. Mit 11 ist eine radial äußere Zunge bezeichnet, mit 12 eine radial innere Zunge. Die Zungen sind an ihrem freien Ende mit radial nach innen gerichteten Schneiden 13 bzw. 14 ausgebildet.

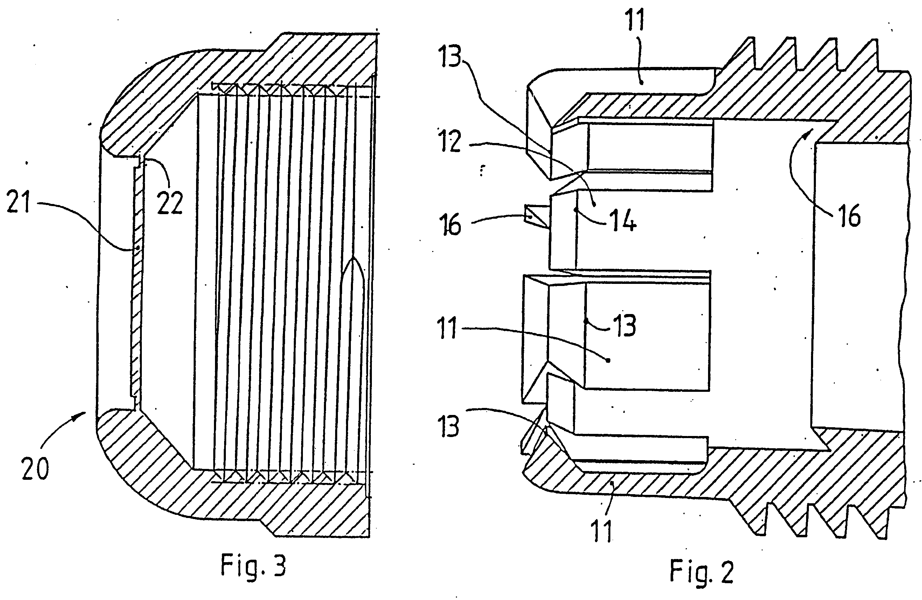

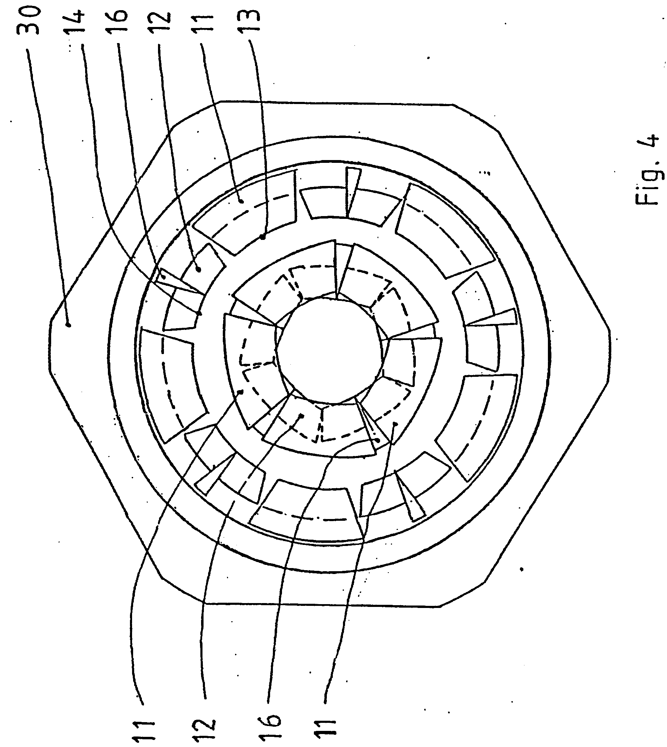

Fig. 2 läßt erkennen, daß auf dem Rücken bzw. der Außenfläche der radial innenliegenden Zungen 12 ein Anschlag 16 vorgesehen ist. Dieser Anschlag ist auch in Fig. 4 gezeigt, um die Wirkungsweise dieses Anschlages zu erläutern. In Fig. 4 sind nämlich zwei Betriebszustände verdeutlicht worden, zum einen sind die Zungen 11 und 12 im äußeren Teil der Zeichnung in Normalstellung gezeigt, d.h. wenn die Hutmutter nicht auf den Schraubstutzen 10 aufgeschraubt worden ist. Im inneren Teil der Zeichnung sind die Zungen 11 und 12 im angezogenen Zustand zu erkennen, nämlich wenn die Hutmutter auf die Verschraubung des Schraubstutzens 10 fest aufgeschraubt worden ist. Es ist zu erkennen, daß ein weiteres Zusammenbringen der äußeren Zungen durch die Anschläge 16 verhindert wird.

Fig. 4 läßt auch erkennen, in welcher Art und Weise die einzelnen Zungen 11 und 12 im Hinblick auf das Zentrum des Schraubstutzens 10 zueinander versetzt sind. In der Tat liegen die Außenflächen der inneren Zungen 12 und die Innenflächen der äußeren Zungen 11 im nichtbelasteten Zustand etwa auf einer gemeinsamen Zylinderfläche. Durch das Zusammenziehen mit Hilfe der Hutmutter wird diese gemeinsame Fläche im wesentlichen in die Form eines flachen Kegels gebracht, und auch im angezogenen Zustand bilden die oben erwähnten Innen- und Außenoberflächen der Zungen eine gemeinsame räumliche Fläche.

In Fig. 1 ist mit 16 ein vorspringender Teil am Einlauf des Gewindes des Schraubstutzens 10 gezeigt. Es handelt sich hierbei um einen radial nach außen vorspringenden Teil, dessen radiale Außenerstreckung jedoch geringer als der Grund des Gewindes ist. Mit Hilfe eines solchen Vorsprunges 16 oder mehrerer derartiger Vorsprünge kann eine Verdrehsicherung stufenlos über den gesamten Drehbereich der Hutmutter 20 erzielt werden. Bei Verwendung mehrerer Vorsprünge kann ein Verkanten der Hutmutter verhindert werden.

Fig. 3 zeigt Einzelheiten der Hutmutter 20 einer Verschraubung gemäß der Erfindung. Im Bereich der Durchgangsöffnung befindet sich eine Art Membrane 21 mit einer ringförmigen Sollbruchstelle 22.

Es wird betont, daß die einzelnen Zungen in axialer Erstreckung eine konstante Breite haben. Der Zwischenraum zwischen den einzelnen Zungen in Umfangsrichtung kann so klein wie hinsichtlich der Fertigung durch Formspritzen möglich gehalten werden. Es ist wichtig, daß beim anfänglichen Aufschrauben der Hutmutter 20 auf die Verschraubung des Schraubstutzens 10 erreicht wird, daß die inneren Zungen 12 unter die äußeren Zungen 11 gelangen.

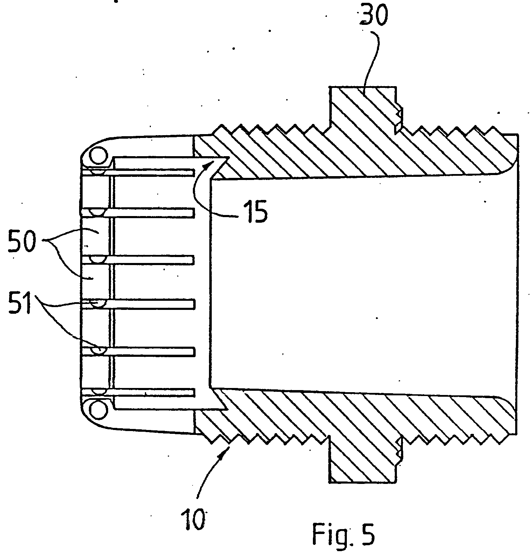

Bei dem in Fig. 5 gezeigten Schraubstutzen 10 handelt es sich um eine abgewandelte Ausführungsform. Der Schraubstutzen 10 ist mit einer Mehrzahl von am Umfang gleichmäßig verteilten Zungen 50 ausgebildet. Die Zungen 50 haben eine konstante Breite und sind voneinander durch Schlitze getrennt. Im Bereich der freien Enden sind zwischen die Zungen 50 Kugeln 51 zwischengesetzt, die jeweils in Kugelpfannen angeordnet sind. Auf diese Art und Weise ist ein Formschluß zwischen den Zungen über die zwischengesetzten Kugeln erreicht worden. Wird eine Hutmutter auf das Gewinde des Schraubstutzens 10 aufgeschraubt, so können sich die Zungen 50 radial einwärts bewegen, so daß die innen an den Zungen 50 angeordneten Schneiden auf dem Kabelmantel zum Aufliegen kommen.

## Patentansprüche

1. Kabelverschraubung aus Kunststoff zur Ein- und Durchführung, Abdichtung und Zugentlastung von Kabeln od. dgl., bestehend aus einem Schraubstutzen (10) mit Dichtungskörper und einer Hutmutter (20), wobei am Schraubstutzen (10) voneinander getrennte Zungen (11,12) angeordnet sind, welche beim Aufschrauben der Hutmutter (20) zusammen mit dem Dichtungskörper auf die Umfangsfläche des Kabels gedrückt werden, wobei die Zungen (11, 12) jeweils eine konstante Breite haben, die Zungen (11, 12) abwechselnd in radial innere (12) und radial außenliegende Zungen (11) gruppiert sind, beim Aufschrauben der Hutmutter (20) die radial äußeren Zungen (11) mit den benachbarten radial innere Zungen (12) in Berührungseingriff angeordnet sind, dadurch gekennzeichnet, daß die radial innenliegenden Zungen (12) an ihrer Außenfläche jeweils mit einem Anschlag (16) zur Begrenzung der zentripetalen Bewegung der radial äußeren Zungen (11) ausgebildet sind, und daß die Zungen (11, 12) an ihren freien Enden innen mit in Umfangsrichtung orientierten Schneiden (13, 14) ausgebildet sind.

2. Kabelverschraubung aus Kunststoff zur Ein- und Durchführung, Abdichtung und Zugentlastung von Kabeln od. dgl., bestehend aus einem Schraubstutzen (10) mit Dich-tungskörper und einer Hutmutter (20), wobei am Schraubstutzen (10) voneinander getrennte Zungen (50) angeordnet sind, welche beim Aufschrauben der Hutmutter (20) zusammen mit dem Dichtungskörper auf die Umfangsfläche des Kabels gedrückt werden, wobei die Zungen (50) jeweils eine konstante Breite haben, beim Aufschrauben der Hutmutter (20) einander benachbarte Zungen (50) in Berührungseingriff angeordnet sind dadurch gekennzeichnet, daß zwischen den freien Enden der Zungen (50) eingesetzte Kugeln (51), die in Kugelpfannen angeordnet sind und zwischen den Zungen einen Formschluß bilden und daß die Zungen (50) an ihren freien Enden innen mit in Umfangsrichtung orientierten Schneiden (13, 14) ausgebildet sind.

## Claims

1. Screw-threaded cable fitting of plastic material for insertion and feed-through, sealing and tension relief of cables or the like, comprising a threaded ferrule (10) with sealing body and a cap nut (20), with separate projections (11, 12) being disposed at the threaded ferrule (10), which when the cap nut (20) is being screwed on are pressed upon the peripheral surface of the cable together with the sealing body, with the projections (11, 12) each having a constant width, the projections (11, 12) being grouped alternately in radially inner (12) and radially outer projections (11), when screwing on the cap nut (20) the radially outer projections (11) being arranged in touching engagement with the adjacent radially inner projections (12), characterized in that the exterior surface of the radially inner projections (12) each is provided with a stop (16) for delimiting the centripetal motion of the radially outer projections (11), and that at the inside of their free ends the projections (11, 12) are provided with cutting edges (13, 14) aligned in peripheral direction.

2. Screw-threaded cable fitting of plastic material for insertion and feed-through, sealing and tension relief of cables or the like, comprising a threaded ferrule (10) with sealing body and a cap nut (20), with separate projections (50) being disposed at the threaded ferrule (10), which when the cap nut (20) is being screwed on are pressed upon the peripheral surface of the cable together with the sealing body, with the projections (50) each having a constant width, with adjacent projections (50) being arranged in touching engagement when screwing on the cap nut (20), characterized in that balls (51) are inserted between the free ends of projections (50), which balls are disposed in ball cups and which effect a closing form between the projections and that at the insides of their free ends the projections (50) are provided with cutting edges (13, 14) aligned in peripheral direction.

## Revendications

1. Fixation vissée pour câbles, en matière synthétique, pour entrées et passage de câbles, capable de procurer étanchéité et décharge de traction pour des câbles et analogues, comprenant un manchon fileté (10), avec un corps d'étanchéité, et un écrou-capuchon (20), des languettes (11, 12) séparées l'une de l'autre étant portées par le manchon (10) et pressées, avec le corps d'étanchéité, sur la surface extérieure du câble lors du vissage de l'écrou-capuchon (20),
ces languettes (11,12) ayant chacune une largeur constante, et étant disposées de façon alternée en languettes radialement internes (12) et languettes radialement externes (11),
les languettes radialement externes (11) viennent en contact avec les languettes radialement internes (12) adjacentes lorsque l'écrou-capuchon (20) est vissé, caractérisée en ce que les languettes radialement internes (12) présentent chacune, sur leur surface externe une butée (16) pour limiter le déplacement centripète des languettes radialement externes (11),
et en ce que les languettes (11, 12) présentent intérieurement, à leur extrémité libre, des bords tranchants (13, 14) orientés dans la direction périphérique.

2. Fixation vissée pour câbles, en matière synthétique, pour entrées et passage de câbles, capable de procurer étanchéité et décharge de traction pour câbles et analogue, comprenant un manchon fileté (10), pourvu d'un corps d'étanchéité, et un écrou-capuchon (20), des languettes (50) séparées l'une de l'autre étant portées par le manchon (10) et pressées, avec le corps d'étanchéité, sur la surface extérieure du câble lors du vissage de l'écrou-capuchon (20),
les languettes (50) ayant chacune une largeur constante, les languettes adjacentes (50) venant en contact entre elles lorsque l'écrou-capuchon (20) est vissée, en ce que les languettes radialement internes (12) présentent chacune, sur leur surface externe une butée (16) pour limiter leur déplacement centripète,
caractérisée en ce que des billes (51) insérées entre les extrémités libres des languettes (50), sont logées dans des cavités sphériques, et établissent une liaison par conjugaison de formes entre les languettes, et en ce que les languettes (50) présentent intérieurement, à leur extrémité libre, des bords tranchants (13,14) orientés dans la direction périphérique.
